# EUROPEAN PATENT APPLICATION

(11) **EP 1 574 381 A2**
(43) Date of publication of application: **14.09.2005**
(21) Application number: 05380042.1
(22) Date of filing: 04.03.2005
(51) Int. Cl.: B60K 15/04

(54) **Fuel tank filler cap module**

(30) Priority: 11.03.2004 ES 200400601 U
(71) Applicant: Maier, S. Coop., 48300 Gernika (ES)
(72) Inventor: Mandaluniz Bilbao, Joseba, (ES)
(74) Representative: Urteaga Simarro, José Antonio

(57) **Abstract**

Vehicle fuel tank filler cap module (1), comprising a base member (2) that is fitted into the bodywork (3) of the vehicle, a cap (4) that comprises a tilting arm (5) that pivots with respect to said base member (2), and a cover plate (6) that is fitted onto the cap (4). The purpose of the cap module (1) is to be easily adaptable to the bodywork (3) of different types of vehicles, and to achieve this, the cover plate (6) is fixed to the cap (4) by fastening means (60,61,62) and comprises, on its inner face, at least one support rib (7) situated on a support surface (8) comprised in the cap (4). The support ribs (7) compensate for the differences between the shape of the profile of the cover plate (6) and the shape of the top part of the cap (4).

## Description

### TECHNICAL SECTOR

The present invention relates to fuel tank filler cap modules used particularly in motor vehicles.

### PRIOR ART

In known arrangements fuel tank filler cap modules are disposed in the bodywork of motor vehicles and comprise a base member fitted into an aperture in the bodywork, extending from said aperture to a tubular filler mouth.

ES-2190340-A1 discloses a cap module with a base member and a cap, with said cap comprising a swan-neck-shaped tilting arm by means of which said cap pivots with respect to said base member, opening and closing the access to the base member.

To guarantee aesthetic continuity between the bodywork and the cap, it is necessary, on the one hand, that said cap is painted in exactly the same colour as the bodywork and, on the other, that the outer surface of the cap is level with the outer surface of the bodywork.

In the cap module disclosed in ES-219340-A1, given that the cap itself and the tilting arm form a single part, both the cap itself and the tilting arm have to be painted. Furthermore, in the event that a supplier provides the manufacturer with the cap module unit already assembled and the cap already painted, any variation between the colour of the bodywork of the vehicles and the colour of the cap in the cap modules renders said cap modules unusable for said vehicles.

Moreover, to ensure that the outer surface of the cap in the cap modules is level with the outer surface of the bodywork they are to be fitted into, for each vehicle model where the outer surface of the bodywork has a different shape a cap module with a different cap must be manufactured, i.e. with a cap that adapts in each case to the shape of the outer surface of the bodywork.

ES-2100761-T3 partially resolves these problems. It discloses a fuel tank cap system that comprises a base member and a cap with a swan-neck-shaped tilting arm by means of which said cap pivots with respect to said base member, and also comprises an outer "skin" or cover plate connected to the cap. Said cover plate can be attached to the cap, for example, by a vibration-welding procedure.

In this case, only the cover plate needs to be painted. In addition, the supplier can provide the manufacturer with the entire cap module unit already assembled except for the cover plate. The manufacturer only has to fit the cover plate onto the cap module and fit said cap module into the corresponding bodywork.

As a result, any problem concerning the difference in colour between the bodywork and the cap module affects only the cover plate and not the entire cap module. This ensures that cap modules provided by the supplier that do not include cover plates are valid for the model of vehicle they correspond to irrespective of the colour of the bodywork they are to be fitted into. Subsequently, all that is required is to fit a cover plate with the corresponding colour onto the cap module.

### DISCLOSURE OF THE INVENTION

It is an object of this invention to provide a fuel tank filler cap module that is easily adaptable to bodywork on different types of vehicles.

The cap module of the invention comprises a base member that is fitted into an aperture in the vehicle bodywork and which has an opening in which a tubular filler mouth is housed; a cap that comprises a tilting arm that pivots with respect to said base member; and a cover plate that is fitted onto the cap.

Said cover plate has a profile with an essentially constant thickness, and said profile provides aesthetic continuity between the bodywork and the cap module. The cover plate is attached to said cap by fastening means, by the elastic deformation of the material itself, i.e. without the use of tools.

The cover plate comprises on its inner face at least one support rib and said cap comprises a support surface. The support rib is situated on said support surface, and said support rib compensates for the differences between the shape of the cover plate profile and the shape of the top part of the cap, on both the longitudinal and transverse axes.

This means that the same base member/cap unit can be used for bodywork on different models of vehicles simply by designing for each case a cover plate with an outer surface that adapts to the outer surface of the bodywork on the corresponding motor vehicle. As a result, the supplier can provide the same base member/cap unit for different models of vehicles with the same perimeter shape, thereby simplifying the manufacturing process as there is no need to manufacture different caps for different models of vehicles, reducing costs in the process.

Furthermore, this ensures that orders for base member/cap units sent by the supplier are always valid irrespective of the model of vehicles they are to be fitted onto. For each model of vehicle with different bodywork a different cover plate is used which has its corresponding profile and corresponding support rib by means of which said profile is adapted to the upper face of the cap.

These and other advantages and characteristics of the invention will be made evident in the light of the drawings and the detailed description thereof.

### Description of the drawings

Fig. 1 is a profile view in section of an embodiment of the invention.
Fig. 2 shows the inner face of the cover plate of the embodiment in Fig. 1.
Fig. 3 is a ground view of the cap of the embodiment in Fig. 1.
Fig. 4 is a view in section according to section IV-IV of Fig. 2 including both the cover plate and the cap.
Fig. 5 shows profile views of different embodiments of the cover plate.
Fig. 6 shows the embodiment in Fig. 1 adapted to a vehicle in which the distance between the bodywork and the tubular filler mouth is smaller than in the embodiment shown in Fig. 1.

### Detailed description of the invention

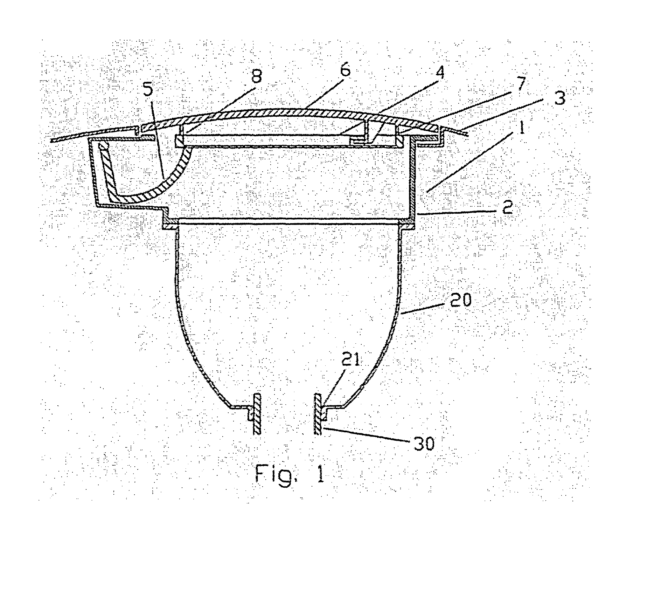

With reference to figure 1, the cap module of the invention comprises:
- a base member (2) that is fitted into an aperture in the bodywork (3) of a motor vehicle,
- a cap (4) comprising a tilting arm (5) that pivots with respect to said base member (2), and
- a cover plate (6) that is fitted onto the cap (4), with said cover plate (6) having a profile with a substantially constant thickness.

The base member (2) comprises an elastomer seal (20) that features an opening (21) in which a tubular filler mouth (30) is housed. In this embodiment, the tilting arm (5) of the cap (4) is swan-neck-shaped.

The cover plate (6), which is fixed onto the cap (4) by fastening means, provides aesthetic continuity between the bodywork and the cap module (1), both with regard to colour and the shape of the outer surface.

The cover plate (6) comprises on its inner face at least one support rib (7) which is situated on a support surface (8) disposed on the cap (4). By means of said support rib (7) the differences between the shape of the profile of the cover plate (6) and the shape of the top part of the cap (4) are compensated for on both the longitudinal and transverse axes. In short, the support rib (7) ensures that a constant spacing is maintained between the edge of the profile of the cover plate (6) and the base member (2), thus providing aesthetic continuity between the bodywork (3) and the cover plate (6).

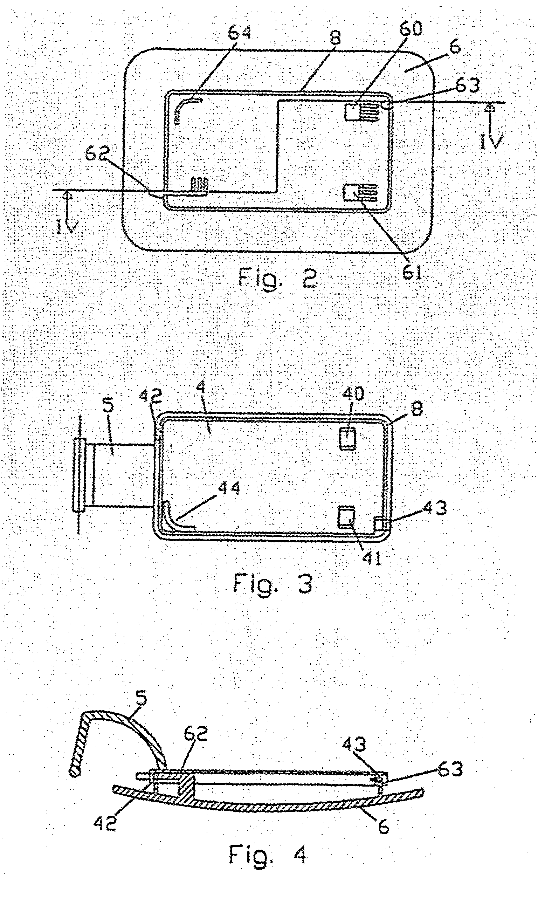

As shown in figure 2, in a preferred embodiment the support rib (7) extends along the inner face of the cover plate (6) along an enclosed area substantially parallel to the area of the cover plate (6). Said support rib (7) is situated on the support surface (8) shown in figure 3.

As shown in figure 2, in this embodiment the fastening means comprise L-shaped lugs (60,61) which are inserted into respective housings (40,41) disposed on the top part of the cap (4) and shown in figure 3. Said fastening means also comprise an elastic tab (62) which is inserted into a hole (42) disposed transversally in the top part of the cap (4). The cover plate (6) is therefore prevented from moving in the transverse, longitudinal and axial direction.

The cover plate (6) also comprises a projection 63 that is inserted into a guide 43 disposed on the cap (4) in order to guide said cover plate (6) during assembly. In addition, the cover plate (6) comprises an auxiliary curved rib 64 that is supported laterally on a concave surface of a curved rib 44 disposed on the top part of the cap (4).

In order to fix the cover plate (6) onto the cap (4), said cover plate (6) is supported on said cap (4) and the projection 63 is housed in the guide 43. The cover plate (6) is then slid onto the cap (4) guided by the guide 43 and by the curved ribs 64 and 44, with the lugs (60,61) being inserted into the housings (40,41) and an elastic tab (62) being inserted into the hole (42). In addition to being easy to assemble, the cap module (1) has the additional advantage of also being easy to dismantle, as the operator simply has to press laterally on the elastic tab (62) and slide the cover plate (6) in an opposite direction to the assembly direction.

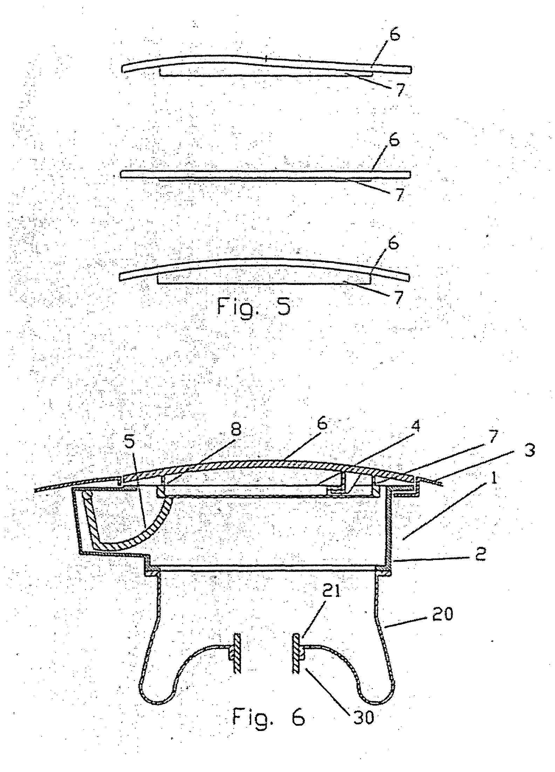

The base member (2) / cap (4) unit of the inventive cap module (1) can be used for different models of vehicles simply by designing for each case a cover plate (6) with an outer surface that adapts to the outer surface of the bodywork (3) of the corresponding model of vehicle. Figure 5 shows, by way of example, different embodiments of the cover plate (6). It can be seen in the three cases that the support rib (7) has a horizontal base which means that any of said support ribs can be fixed to the cap (4) in figure 3.

To enable a single base member (2) / cap (4) unit to be used for different models of vehicles, in addition to adapting the cover plate (6) to the outer surface of the bodywork (3), said base member (2) must also be adapted to the distance between the bodywork (3) and the tubular filler mouth (30), as said distance varies from some models of vehicles to others.

In the inventive cap module (1) this is achieved by making the elastomer seal (20) of the base member (2) bellows-shaped in an area close to said opening (21). Said bellows shape enables the opening (21) to be displaced axially so it can be adapted to tubular filler mouths (30) disposed at different distances from the bodywork (3).

Thus, for example, the cap module (1) of the embodiment shown in figure 1 can also be used for models of vehicles in which the distance between the bodywork (3) and the tubular filler mouth (30) is smaller, as can be seen in figure 6. Said figure 6 shows the bellows-shaped area of the seal (20) made of elastomer or another thermoplastic material with similar characteristics. Said bellows-shaped area has had to be extended in the case of figure 1 to compensate for the greater distance between it and the tubular filler mouth (30).

## Claims

1. Cap module (1) for a vehicle fuel tank that comprises a base member (2) that is fitted into an aperture in the bodywork (3) of the vehicle and which comprises an opening (21) in which a tubular filler mouth (30) is housed, a cap (4) that comprises a tilting arm (5) that pivots with respect to said base member (2), and a cover plate (6) that is fitted onto the cap (4), with the cover plate (6) having a profile with a substantially constant thickness and with said profile providing aesthetic continuity between the bodywork (3) and the cap module (1), **wherein** said cover plate (6) is fixed to the cap (4) by fastening means (60,61,62) and comprises, on its inner face, at least one support rib (7) situated on a support surface (8) comprised in the cap (4), with said support rib (7) compensating for the differences between the shape of the profile of the cover plate (6) and the shape of the top part of the cap (4).

2. Cap module (1) according to claim 1, **wherein** the support rib (7) extends along the inner face of the cover plate (6) along an enclosed area substantially parallel to the area of the cover plate (6).

3. Cap module (1) according to any of the preceding claims, **wherein** the fastening means (60,61,62) comprise L-shaped lugs (60,61) that are inserted into respective housings (40,41) disposed on the top part of the cap (4) and also comprise an elastic tab (62) that is inserted into a hole (42) disposed transversally on the top part of the cap (4).

4. Cap module (1) according to claim 3, **wherein** the cover plate (6) also comprises, to guide said cover plate (6) during assembly, a projection (63) that is inserted into a guide (43) disposed on the cap (4), and a curved auxiliary rib (64) that is supported laterally on a concave surface of a curved rib (44) disposed on the top part of the cap (4).

5. Cap module (1) according to any of the preceding claims, wherein the base member (2) comprises an elastomer seal (20), with said elastomer seal (20) comprising the opening (21), and said elastomer seal (20) being, in an area close to said opening (21), bellows-shaped.
